# EUROPEAN PATENT SPECIFICATION

(11) **EP 2 505 893 B1**
(45) Date of publication and mention of the grant of the patent: **14.09.2016**
(21) Application number: 12161512.4
(22) Date of filing: 27.03.2012
(51) Int. Cl.: F16L 9/08

(54) **Concrete tube with welded joint**
Betonleitung mit gelötetem Verbindungsstück
Tube de béton doté d'un joint soudé

(30) Priority: 28.03.2011 IT MI20110490
(43) Date of publication of application: 03.10.2012
(73) Proprietor: Cavadini, Patrizio, 24040 Suisio (BG) (IT)
(72) Inventor: Cavadini, Patrizio, 24040 Suisio (BG) (IT)
(74) Representative: Colombo, Stefano Paolo

(56) References cited:
- EP-A1- 1 408 266
- DE-A1- 19 743 970
- US-A- 2 307 685
- US-A- 2 348 477

## Description

The present invention relates to the sector of concrete products (typically tubes) and more particularly relates to a concrete tube with a welded joint.

For many years now concrete tubes for conveying liquids and liquid waste from one location to another have been known. These liquids may consist of clean water, foul water, slurry from industrial processes or liquid sewage. The liquids and slurry are conveyed along a pipeline formed by a certain number of tubes connected to each other end-to-end in succession.

The liquids may be chemically aggressive or substantially inert. The aggressive liquids may be those liquids which produce an acid (for example sulphuric acid) inside the pipeline.

Both in the case of substantially inert liquid and in the case of chemically aggressive liquid the problem arises of providing a system for preventing leakage of liquid from the pipeline (or, in certain cases, the entry from outside of undesirable liquids inside the pipeline). The most critical points where leakage of liquid occurs are the joining zones between adjacent tubes. In fact, each tube is connected to another tube at an end which is typically of the male or female type. However, this male-female connection zone does not provide a perfect seal able to prevent the liquids from seeping through the space between tubes and being dispersed into the environment.

The Applicant has sought to solve the problem of improving the precision of the male/female joint, but however has not completely solved the problem of ensuring leak-tightness. Moreover, manufacturing large-diameter concrete tubes with precisely shaped ends does not however solve definitively the problem of leak-tightness and involves a significant increase in costs for the tube manufacturer. In any case, during installation of the tubes, small breakages could occur at the ends, with the result that the greater machining precision would be of no use. Moreover, leakages could easily occur as a result of settling movements of the tube once it has been laid.

The Applicant aims to solve the problem of ensuring leak-tightness of the concrete tubes in an advantageous manner, without altering the precision of the male/female joints.

EP 1 408 266 relates to a tubular element for forming pipes for trunk lines with a continuous lining covering the whole inner surface of the tubular element.

EP 1 408 173 relates to a covering for protecting surfaces in general. EP 2 204 597 relates to a reinforced concrete pressure pipe having a casing tube made of reinforced concrete.

DE 85 05 653 U1 relates to a concrete pipe for use in or for the transport of aggressive fluids.

EP 0 063 260 discloses a concrete pipe with inner lining.

DE 197 43 970 A1 discloses a pipe for aggressive waste water.

US 2 307 685 A discloses a pipe for use in oil or other deep wells. US 2 348 477 A discloses a composite pipe formed of steel and concrete. EP 1 408 266 A1 discloses a tubular element for forming pipes for trunk lines, purification plants and sewage systems in general.

According to a first aspect of the present invention provides a concrete tube comprising a first end and a second end, according with claim 1, comprising a first connection fascia which is associated with said first end and which extends along at least a portion of the inner perimeter of the cross-section of the first end and a second connection fascia which is associated with said second end and which extends along at least a portion of the inner perimeter of the cross-section of the second end,
wherein an inner edge of said first connection fascia is at a distance from an opposed inner edge of said second connection fascia so that an inner tubular surface of said concrete tube between said inner fascia edges is free of lining and concrete is exposed,
wherein each of said first connection fascia and said second connection fascia comprises at least one anchoring device which projects radially outwardly and is concrete embedded, and
wherein said at least one anchoring device is arranged in a such a manner as to form a continuous projection which extends, within the concrete, substantially transversely with respect to a longitudinal axis of the concrete tube.

Only end fascias are provided at the ends of a concrete tube. This brings a high saving of plastic material. In addition, the same fascias can be used for tubes having different lengths. This is an advantageous feature resulting in cost saving. The surface of the tube between the edges of the two fascias is left without any lining and therefore the concrete is exposed to the flow of fluid.

Advantageously, first connection fascia and said second connection fascia comprise one or a plurality of anchoring devices. Differently from the prior art arrangements, the anchoring devices are arranged in a such a manner as to form one or a plurality of continuous parallel rows which extend substantially transversely with respect to a longitudinal axis of the concrete tube. The anchoring devices may extend along lines parallel to each other, for example annular lines if the fascia consists of a closed ring, and in any case arranged transverse to the flow. This arrangement results in an additional barrier to the flow of fluids. The anchoring devices extends continuously, namely uninterrupted.

In embodiments of the invention, the first connection fascia extends axially outwardly from the concrete tube by a certain overlapping distance.

The first connection fascia and the second connection fascia are made of a plastic material selected from the group comprising: high density polyethylene (HDPE), polyvinyl chloride (PVC), linear low-density polyethylene (LLDPE) and flexible polypropylene (FPP).

Profitably, the first connection fascia and the second connection fascia may be anchored to the concrete tube during manufacture of said tube.

In embodiments, the first connection fascia has a width of between about 200 mm and about 500 mm. A fascia of such a width allows a profitable grip to the concrete tube and leaves an overlapping part for connecting this fascia to a second fascia of another tube.

In embodiments, the second connection fascia has a width of between about 150 mm and about 300 mm. A fascia of such a width allows a profitable grip to the concrete tube and allows a profitable connection with a first fascia of another tube.

In embodiments, the anchoring devices have a T-shaped cross-section.

An example of using the present invention is a pipeline comprising a first concrete tube and a second concrete tube connected in end-to-end fashion in such a manner that the longitudinal axis of the first concrete tube substantially coincides with the longitudinal axis of the second concrete tube, wherein:
- the first concrete tube in turn comprises a first end, a second end and, associated with the first end, a first connection fascia which extends along at least a portion of the inner perimeter of the cross-section of the first end;
- the second concrete tube in turn comprises a first end, a second end and, associated with the second end, a second connection fascia which extends along at least a portion of the inner perimeter of the cross-section of the second end;
- the first and second connection fascias are connected to each other along at least one edge,
- an inner edge of said first connection fascia is at a distance from an opposed inner edge of said second connection fascia so that an inner tubular surface of said concrete tube between said inner fascia edges is free of lining and concrete is directly exposed,
- each of said first connection fascia and said second connection fascia comprises at least one anchoring device which projects radially outwardly and is concrete embedded, and
- said at least one anchoring device is arranged in a such a manner as to form a continuous projection, within the concrete, which extends substantially transversely with respect to a longitudinal axis of the concrete tube.

The first and second connection fascias are preferably connected to each other by welding along at least one edge of an overlapping band.

The overlapping band may be a band projecting axially outwardly from said first connection fascia or may be a separate band.

The first fascia and second fascia could be made of a plastic material selected from the group comprising: high density polyethylene (HDPE), polyvinyl chloride (PVC), linear low-density polyethylene (LLDPE) and flexible polypropylene (FPP).

The present invention provides a method for constructing a pipeline comprising:
- providing a first tube as set forth above;
- providing a second tube as set forth above; and
- connecting together the first connection fascia of the first tube and the second connection fascia of the second tube along at least one edge.

The step of connecting may comprise the step of welding the first and second connection fascias by means of a hot air system, an end-to-end hot plate system, extrusion techniques.

A detailed description of the present invention now follows, being provided by way of a non-limiting example, to be read with reference to the accompanying drawings in which:
- Fig. 1 is an axonometric view which shows the male end of a concrete tube according to an embodiment of the present invention;
- Fig. 1.1 is an axonometric view which shows the male end of a concrete tube according to another embodiment of the present invention;
- Fig. 2 is a longitudinally sectioned view of the male end of the tube according to Fig. 1;
- Fig. 2.1 is a longitudinally sectioned view of the male end of the tube according to Fig. 1.1;

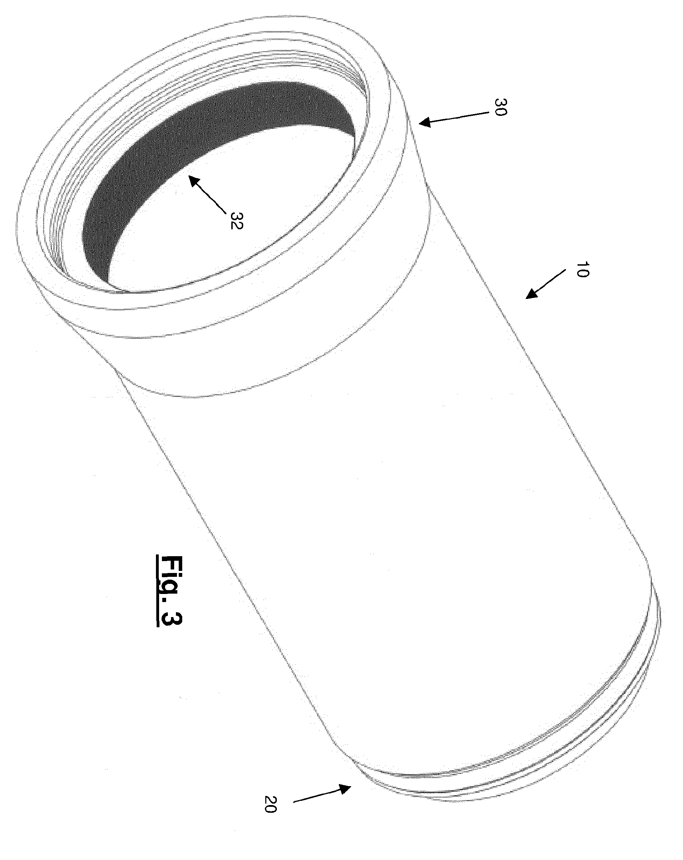

- Fig. 3 is an axonometric view of a female end of a concrete tube according to an embodiment of the present invention;

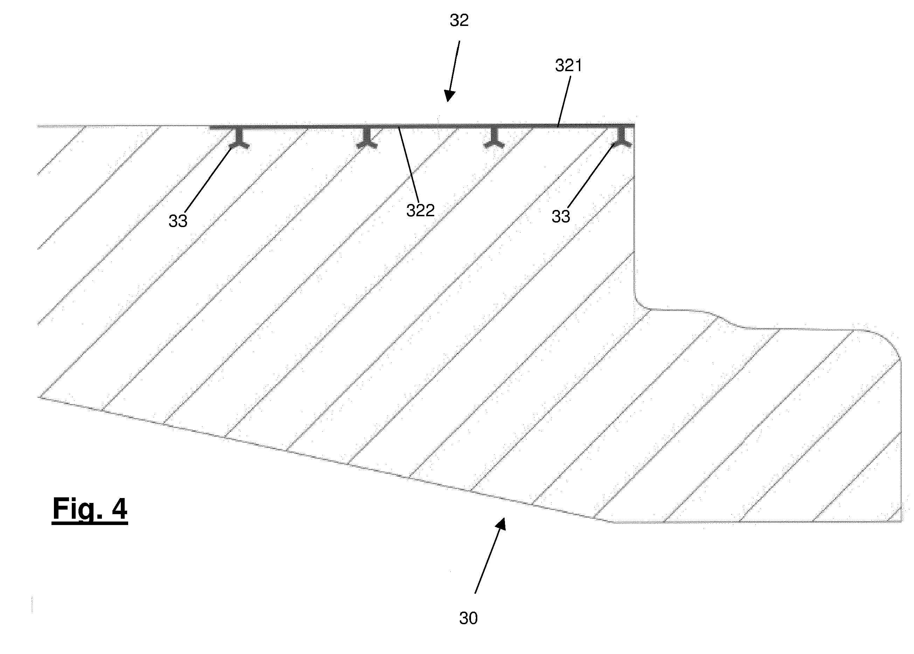

- Fig. 4 is a longitudinally sectioned view of the female end of the tube according to Fig. 3;
- Fig. 5 is a cross-sectional view of a joint between a male end of a tube and a female end of another tube according to an embodiment of the present invention;
- Fig. 5.1 is a cross-sectional view of a joint between a male end of a tube and a female end of another tube according to another embodiment of the present invention;
- Fig. 6 is a longitudinal section of two tubes according to an embodiment of the invention while they are connected together to form a pipeline;
- Fig.6.1 is an enlargement portion of Fig. 6; and
- Fig. 7 is an axonometric view of a fascia according to an embodiment of the invention.

The tube 10 according to the present invention may have a circular, elliptical, square, rectangular or polygonal cross-section. The tube according to the present invention is a product made of concrete, preferably vibration-compressed concrete. Typically a circular tube according to the present invention could have a diameter, expressed in cm, of: DN 30, 40, 50, 60, 70, 80, 100, 120, 140, 160, 180, 200, 220, 250 or 300. Typically, a square or rectangular tube could have a cross-section expressed in cm ranging from 75x100 to 600x300 with increments of 25 cm on both sides.

The tube according to the present invention comprises a first end 20 and a second longitudinally opposite end 30. Preferably, the first end 20 is suitably shaped so that it can be connected to the second end 30 of another tube 10 which is identical to (or in any case complements) the tube in question. Preferably, the tube 10 according to the present invention comprises a first male end 20 and a second female end 30 with a diameter greater than the diameter of the male end.

According to the present invention, a first connection fascia 22 is associated with the first end 20. Said first connection fascia 22, in a first embodiment, is a fascia in the form of a closed ring which follows the entire inner profile of the cross-section of the tube 10. In another embodiment, said first connection fascia 22 is a fascia which extends only along a portion of the profile of the internal cross-section of the tube 10, the top arc, the bottom arc or a part thereof. This portion may therefore be greater than, smaller than or substantially equal to a half-section of the tube 10. The length of the open fascia depends mainly on the presumed throughput of liquid inside the tube and/or the type of liquid. Therefore, if it is envisaged that the average liquid level will not be higher than half the cross-section of the tube, a fascia which covers only the bottom arc of the tube may be sufficient. In other embodiments it may be preferable to protect with the fascia only the top arc or both the arcs (i.e. top arc and bottom arc) with two separate fascias.

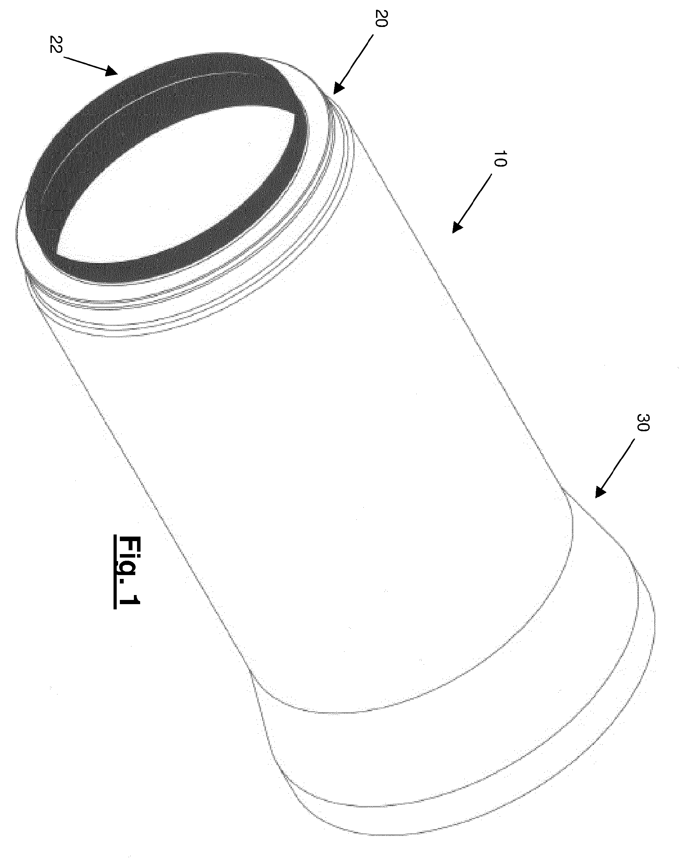

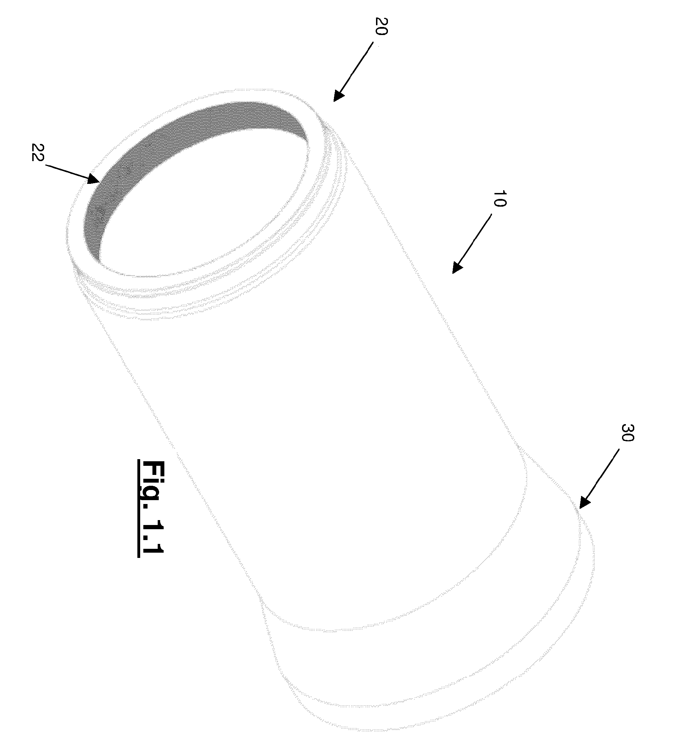

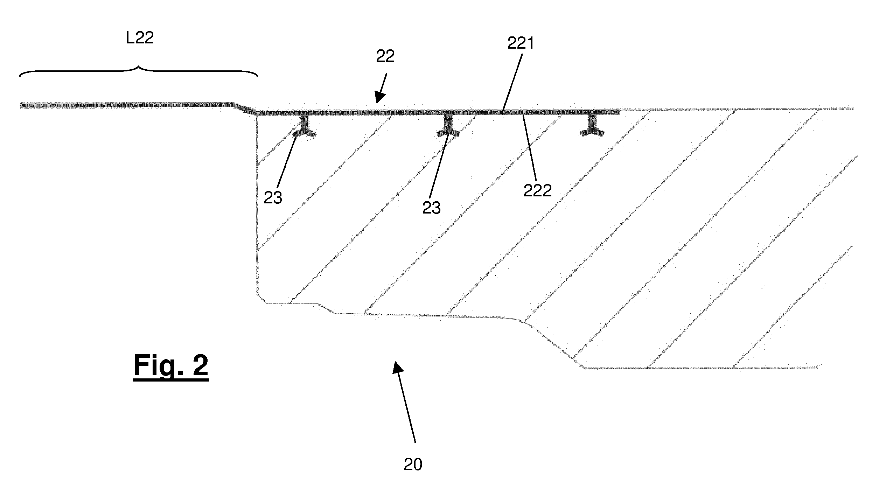

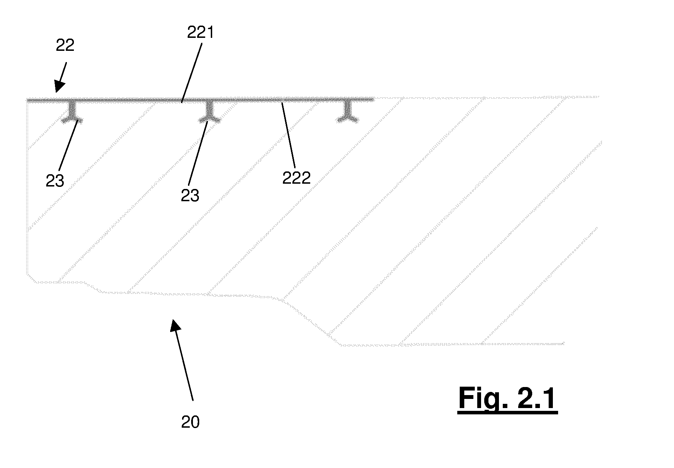

Preferably, according to a first embodiment (Fig. 1 and Fig. 2) the first connection fascia 22 projects beyond the first end 20 of the tube 10 by a certain length L22 and forms an overlapping band.

Alternatively (Fig. 1.1. and Fig. 2.1) the first connection fascia 22 does not project from the first end 20 of the tube 10.

According to the present invention, a second connection fascia 32 is associated with the second end 30. Said second connection fascia 32, in a first embodiment, is a fascia in the form of a closed ring which follows the entire inner profile of the cross-section of the tube 10. In another embodiment, said second connection fascia 32 is a fascia which extends only along a portion of the profile of the cross-section of the tube, the top arc, the bottom arc or a part thereof. This portion may therefore be greater than, smaller than or substantially equal to a half-section of the tube. The length of the open fascia depends mainly on the presumed throughput of liquid inside the tube and/or the type of liquid. Therefore, if it is envisaged that the average liquid level will not be higher than half the cross-section of the tube, a fascia which covers only the bottom arc of the tube may be sufficient. In other embodiments it may be preferable to protect with the fascia only the top arc or both the arcs (i.e. top arc and bottom arc) with two separate fascias.

Preferably, the second connection fascia 32, unlike the first connection fascia shown in Fig. 1 and Fig. 2, does not project beyond the second end 30 of the tube. More preferably, it is substantially flush.

According to one embodiment, the first and second fascias are incorporated during casting performed for manufacture of the concrete product. Alternatively, said fascias could be fitted internally after manufacture of the concrete product. According to this second option, the fascias could be sealed on the inner surface of the concrete product by means of an adhesive or a sealing (for example silicone) product.

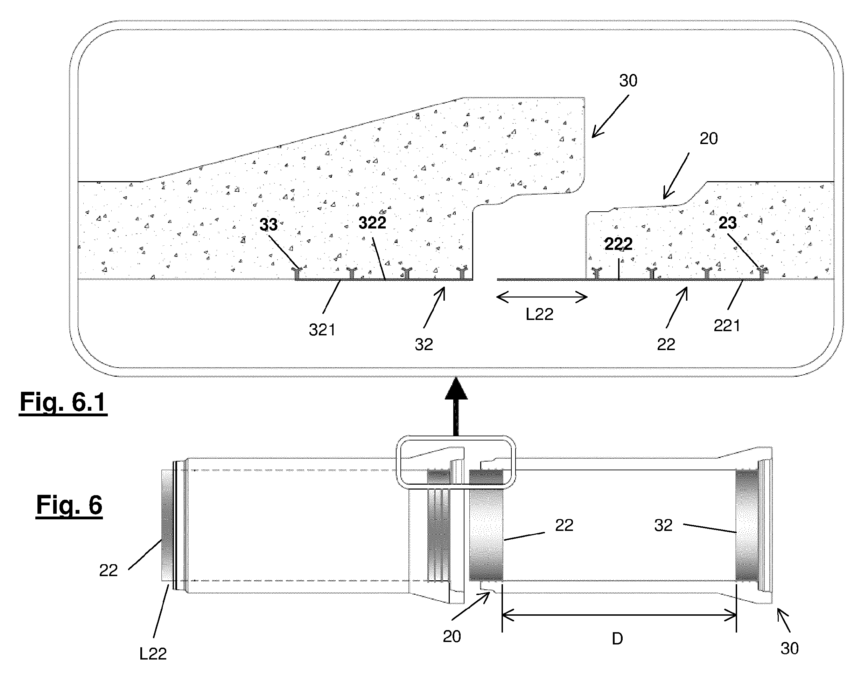

As it is shown in Figure 6, the inner edge of the first connection fascia 22 is at a distance D from the opposed inner edge of the second connection fascia 32 so that an inner tubular surface of said concrete tube 10 between the inner fascia edges is free of lining and concrete is exposed. It is realized that most of the concrete inner tubular surface is free of fascias and the concrete is directly exposed to the fluid flow. Preferably, the inner tubular surface which is exposed and is free of lining is from about 60% to about 90% of the whole inner tubular surface of the tube. In preferred embodiments, the inner tubular surface which is exposed and is free of lining is from about 70% to about 80% of the whole inner tubular surface of the tube.

Preferably, the first and second connection fascias are made of the same material or a material with similar properties as regards the melting point. The first and second connection fascias are made of a plastic material, high-denity polyethylene (HDPE). This material has optimum properties as regards resistance to chemical attack by saline, acid and alkaline solutions, as well as solvents such as alcohol, esters and ketones. Moreover, it has a optimum properties as regards resistance to environments with a pH ranging from 2 to 12, without being affected by any evaporation of sulphates and sulphides.

Other suitable, but less preferred materials, for the first and second connection fascias are PVC, linear low density polyethylene (LLDPE) and flexible polypropylene (FPP).

In general, polyethylenes are preferable since they have a high elongation at break, which may be as much as 800%, allowing them not to break when subject to stress.

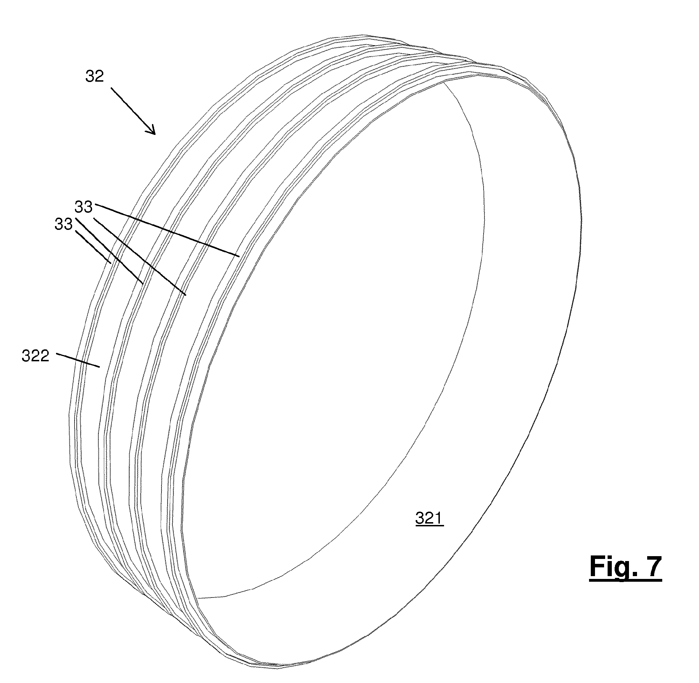

Preferably, the first connection fascia 22 and the second connection fascia 32 comprise a substantially smooth inner surface 221, 321 and an outer surface 222, 321 provided with anchoring devices 23, 33 for anchoring the fascia to the concrete product during manufacture thereof. The anchoring devices may have a T-shaped cross-section, extending along lines parallel to each other, for example annular lines if the fascia consists of a closed ring, and in any case arranged transverse to the flow. Each row may be separated from the other row by a distance of 3-10 cm, for example 5 or 6 cm. The height of the T-shaped anchoring devices may be between about 5 and 15 mm. This anchoring system is also very advantageous because it forms a series of barrier lines which act as obstacles transverse to the direction of flow. The anchoring rows preferably are not present in the overlapping band of width L22. The anchoring devices 33 are also shown in Figure 7. From such a figure, it becomes clear that they form continuous, namely uninterrupted, annular barriers. There could be provided one single continuous projection. Alternatively, it could be provided two or more continuous annular projections. The annular projections are preferably parallel one to the others. The same applies to anchoring devices 23 of fascia 22.

Preferably, the inner surface 221, 321 of the first and second fascias is smooth so as to limit the adhesion of sludge, mud or algae in general. Moreover, this smooth surface may be easily cleaned and decontaminated.

Moreover, the polyethylene resins with which the first and second fascias are made are thermoplastic and can therefore be repaired at any point and at any moment.

Table 1 summarises other properties of the HDPE material from which the fascias 22, 32 may be conveniently made.

**Table 1**

| | |
|---|---|
| FLUIDITY INDEX | 1.0 g/10min |
| DENSITY | 0.941 g/cm³ |
| TENSILE BREAKAGE STRENGTH | 27.24 Mpa |
| ELONGATION AT BREAK VALUE | ≥ 600 % |
| TENSILE YIELD VALUE | 17 Mpa |
| SHORE HARDNESS | 58 |
| RESISTANCE TO EXTERNAL BACKPRESSURE | ≥ 2 bar |
| PULL-OUT TEST STRENGTH | ≥ 38 TON/M² |
| PERFORATION RESISTANCE | 350 N/mm |
| WATER ABSORPTION | 0.3% |
| WATER-SOLUBLE MATTER (after 24h) | 0.003% |
| ABRASION RESISTANCE | 170 n |
| MAX. CONSTANT TEMPERATURE | 65 °C |

The values shown in Table 1 comply with the STM standard.

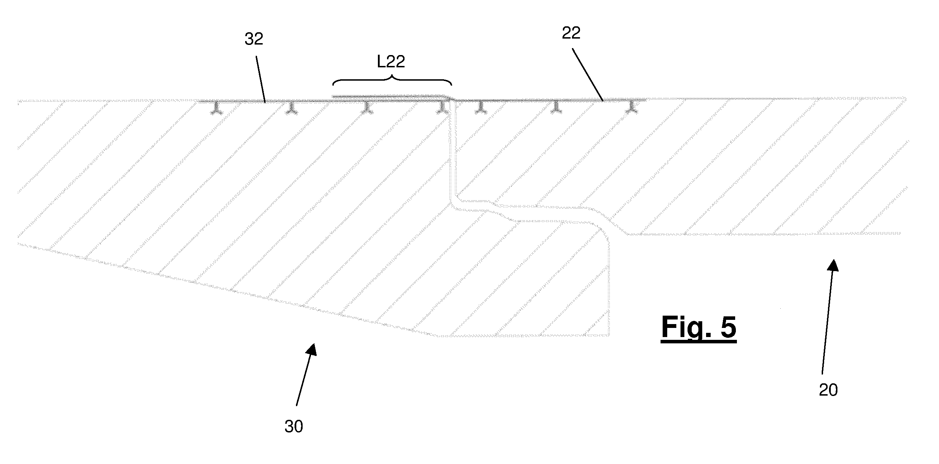

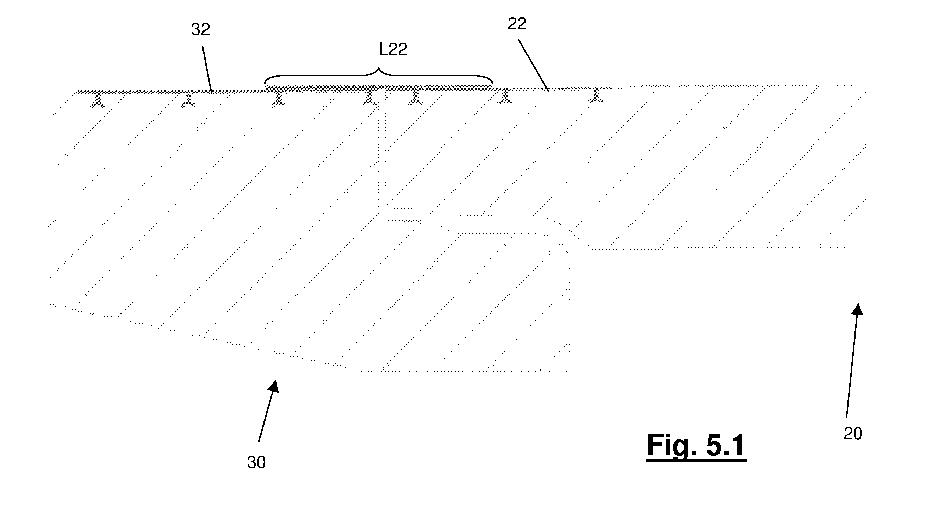

As stated above with reference to Figs. 1 and 2, the first fascia 22 projects by an overlapping distance L22 and forms an overlapping band with respect to the end of the concrete product. In this way, when a tube 10 according to the invention is associated with another tube 10 which is substantially identical, by engaging the first end 20 of the first tube inside the second end 30 of the second tube, the first fascia 22 overlaps at least partially the second fascia 32 and may be welded thereto (Fig. 5).

Alternatively, when the first fascia 22 does not project from the first end of the tube (Fig. 1.1 and Fig. 2.1), a separate overlapping band is provided so as to overlap partially the first fascia and the second fascia.

According to one embodiment, the first fascia may have a width of between about 200 mm and about 500 mm, preferably between 200 mm and 400 mm and even more preferably equal to about 300 mm. The overlapping band may have a width L22 of between about 80 mm and about 200 mm, preferably between 100 mm and 150 mm and even more preferably equal to about 100 mm. The second fascia may have a width of between about 150 mm and about 300 mm, preferably between 150 mm and 200 mm and even more preferably equal to about 200 mm.

Welding may be performed using a hot air system, an end-to-end (hot plate) system or using extrusion techniques. Generally the end-to-end system is used on thicknesses of not less than 2 mm, hot-air welding is used for overlapping arrangements of up to 2 mm thickness, while in the case of thicknesses greater than 2 mm the extrusion welding technique is exclusively used.

According to an embodiment (Fig. 5), welding is performed only along one edge, namely only along the free end of the overlapping band.

According to another embodiment (Fig. 5.1), welding is performed along two edges, namely along the two edges of the overlapping band. This embodiment is advantageous in that it does not envisage a projecting fascia which could hinder the installation operations. Moreover, this embodiment has proved to be particularly advantageous in the case where there are settling movements of the ground after laying of the pipeline.

When the fascias 22, 32 are anchored to the concrete product during manufacture thereof, they have a high resistance to external hydrostatic pressure. With approximately 10 mm anchoring devices it is possible to achieve a permanent anchoring effect which in many cases is greater than the strength of the concrete. In fact, concrete normally breaks at 22 Mpa when the fascias undergo a pull-out test. This is equivalent to a resistance to the external thrust of a water column of 30 metres, or about 50 psi (about 3.5 bar).

Welding a first fascia 22 together with a second fascia 32 of another tube ensures perfect leak-tightness of the pipeline which may be used both in low pressure conditions and when passing through zones where there are water pumping wells serving public aqueducts.

## Claims

1. A concrete tube (10) comprising a first end (20) and a second end (30), the tube (10) comprising a first connection fascia (22) which is associated with said first end (20) and which extends along at least a portion of the inner perimeter of the cross-section of the first end (20) and a second connection fascia (32) which is associated with said second end (30) and which extends along at least a portion of the inner perimeter of the cross-section of the second end (30),
wherein an inner edge of said first connection fascia (22) is at a distance (D) from an opposed inner edge of said second connection fascia (32) so that an inner tubular surface of said concrete tube (10) between said inner fascia edges is free of lining and concrete is exposed,
wherein each of said first connection fascia (22) and said second connection fascia (32) comprises at least one anchoring device (23, 33) which projects radially outwardly and is concrete embedded,
wherein said at least one anchoring device (23, 33) is arranged in a such a manner as to form a continuous projection which extends substantially transversely with respect to a longitudinal axis of the concrete tube (10),
wherein said first connection fascia (22) projects by an overlapping distance (L22) and forms an overlapping band with respect to the first end of the concrete tube (10), so that, when the said concrete tube (10) is associated with another concrete tube (10) which is substantially identical with said concrete tube (10), by engaging the first end (20) of the said concrete tube inside the second end (30) of the other concrete tube, the first connection fascia (22) of the concrete tube overlaps at least partially the second connection fascia (32) of the other concrete tube and may be welded thereto, and wherein the overlapping band is a band projecting axially outwardly from said first connection fascia (22) or when the first fascia (22) does not project from the first end of the tube, the overlapping band is a separate band provided to the said concrete tube (10) so as to overlap partially the first fascia and the second fascia, and wherein said first connection fascia (22) and said second connection fascia (32) are made of a plastic material selected from the group comprising: high density polyethylene, HDPE, polyvinyl chloride, PVC, linear low-density polyethylene, LLDPE, and flexible polypropylene, FPP.

2. The tube (10) according to claim 1 **characterized in that** said first connection fascia (22) and said second connection fascia (32) are anchored to the concrete tube (10) during manufacture of said tube.

3. The tube (10) according to any of preceding claims, wherein said first connection fascia (22) has a width of between about 200 mm and about 500 mm.

4. The tube (10) according to any of preceding claims, wherein said second connection fascia (32) has a width of between about 150 mm and about 300 mm.

5. The tube (10) according to any of preceding claims, wherein said at least one anchoring device (23, 33) has a T-shaped cross-section.

6. A method for constructing a pipeline comprising:
- providing a first tube according to any of claims 1 to 5
- providing a second tube according to any of claims 1 to 6; and
- connecting together the overlapping band of the first tube and the second connection fascia of the second tube along at least one edge.

7. The method according to claim 6, **characterized in that** said step of connecting comprises the step of welding the first and second connection fascias by means of a hot air system, an end-to-end hot plate system, extrusion techniques.

## Patentansprüche

1. Betonrohr (10) mit einem ersten Ende (20) und einem zweiten Ende (30), wobei das Rohr (10) ein erstes Verbindungsband (22) aufweist, das mit dem ersten Ende (20) verbunden ist und sich zumindest entlang einem Teil des inneren Umfangs des Querschnitts des ersten Endes (20) erstreckt, und wobei das Rohr (10) ein zweites Verbindungsband (32) aufweist, das mit dem zweiten Ende (30) verbunden ist und das zumindest entlang einem Teil des inneren Umfangs des Querschnitts des zweiten Endes (30) erstreckt,
wobei ein innerer Rand des ersten Verbindungsbands (22) sich in einer Distanz (D) von einem gegenüberliegenden inneren Rand des zweiten Verbindungsbands (32) befindet, so dass eine innere Rohroberfläche des Betonrohrs (10) zwischen den inneren Bandrändern frei von Auskleidung und Beton freiliegend ist,
wobei sowohl das erste Verbindungsband (22) als auch das zweite Verbindungsband (32) mindestens eine Verankerungseinrichtung (23, 33) aufweisen, die radial nach außen vorragt und einbetoniert ist,
wobei die mindestens eine Verankerungseinrichtung (23, 33) derart angeordnet ist, dass sie eine durchgehende Auskragung bildet, die sich im Wesentlichen quer zu einer Längsachse des Betonrohrs (10) erstreckt,
wobei das erste Verbindungsband (22) mit einer Überlappungsdistanz (L22) hinausragt und einen Überlappungsstreifen bezüglich des ersten Endes des Betonrohrs (10) bildet, so dass, wenn das Betonrohr (10) mit einem anderen Betonrohr (10), das im Wesentlichen identisch mit dem Betonrohr (10) ist, durch Eingreifen des ersten Endes (20) des Betonrohrs in das zweite Ende (30) des anderen Betonrohrs verbunden wird, das erste Verbindungsband (22) des Betonrohrs mindestens teilweise mit dem zweiten Verbindungsband (32) des anderen Betonrohrs überlappt und daran verschweißt werden kann, und
wobei der Überlappungsstreifen ein Streifen ist, der axial nach außen von dem ersten Verbindungsband (22) hinausragt, oder wenn das erste Band (22) nicht von dem ersten Ende des Rohrs hinausragt, der Überlappungsstreifen ein separater Streifen ist, der an dem Betonrohr (10) vorgesehen ist, so dass er teilweise mit dem ersten Band und dem zweiten Band überlappt,
und wobei das erste Verbindungsband (22) und das zweite Verbindungsband (32) aus einem Kunststoffmaterial hergestellt sind, das Polyethylen hoher Dichte, HDPE, Polyvinylchlorid, PVC, lineares Polyethylen niedriger Dichte, LLDPE und/oder flexibles Polypropylen, FPP ist.

2. Rohr (10) nach Anspruch 1,
**dadurch gekennzeichnet,**
**dass** das erste Verbindungsband (22) und das zweite Verbindungsband (32) an dem Betonrohr (10) während Herstellen des Rohrs verankert werden.

3. Rohr (10) nach einem der vorherigen Ansprüche,
wobei das erste Verbindungsband (22) eine Breite zwischen ungefähr 200 mm und ungefähr 500 mm hat.

4. Rohr (10) nach einem der vorherigen Ansprüche,
wobei das zweite Verbindungsband (32) eine Breite zwischen ungefähr 150 mm und ungefähr 300 mm hat.

5. Rohr (10) nach einem der vorherigen Ansprüche,
wobei die mindestens eine Verankerungseinrichtung (23, 33) einen T-förmigen Querschnitt hat.

6. Verfahren zum Herstellen einer Rohrleitung mit:
- Vorsehen eines ersten Rohrs nach einem der Ansprüche 1 bis 5;
- Vorsehen eines zweiten Rohrs nach einem der Ansprüche 1 bis 6; und
- miteinander Verbinden des Überlappungsstreifens des ersten Rohrs und des zweiten Verbindungsbands des zweiten Rohrs zumindest entlang einem Rand.

7. Verfahren nach Anspruch 6,
**dadurch gekennzeichnet,**
**dass** der Schritt des Verbindens den Schritt eines Verschweißens des ersten und zweiten Verbindungsbands mit einem Heißluftsystem, einem Ende-zu-Ende-Heizelementsystem, Extrusionstechniken aufweist.

## Revendications

1. Tube en béton (10) comprenant une première (20) et une seconde extrémité (30), le tube (10) comprenant une première bande de raccordement (22) qui est associée à ladite première extrémité (20) et qui s'étend le long d'au moins une partie du périmètre interne de la section transversale de la première extrémité (20) et une seconde bande de raccordement (32) qui est associée à ladite seconde extrémité (30) et qui s'étend le long d'au moins une partie du périmètre interne de la section transversale de la seconde extrémité (30),
dans lequel un bord interne de ladite première bande de raccordement (22) est à une distance (D) d'un bord interne opposé de ladite seconde bande de raccordement (32) de sorte qu'une surface tubulaire interne dudit tube en béton (10) entre lesdits bords de bande internes est dépourvue de revêtement et le béton est exposé,
dans lequel chacune parmi ladite première bande de raccordement (22) et ladite seconde bande de raccordement (32) comprend au moins un dispositif d'ancrage (23, 33) qui fait saillie radialement vers l'extérieur et est noyé dans le béton,
dans lequel ledit au moins un dispositif d'ancrage (23, 33) est agencé afin de former une saillie continue qui s'étend sensiblement transversalement par rapport à un axe longitudinal du tube en béton (10),
dans lequel ladite première bande de raccordement (22) fait saillie sur une distance de chevauchement (L22) et forme une bande de chevauchement par rapport à la première extrémité du tube en béton (10) de sorte que lorsque ledit tube en béton (10) est associé à un autre tube en béton (10) qui est sensiblement identique audit tube en béton (10), en mettant en prise la première extrémité (20) dudit tube en béton à l'intérieur de la seconde extrémité (30) de l'autre tube en béton, la première bande de raccordement (22) du tube en béton chevauche au moins partiellement sur la seconde bande de raccordement (32) de l'autre tube en béton et peut être soudée à cette dernière, et
dans lequel la bande chevauchante est une bande faisant saillie axialement vers l'extérieur à partir de ladite première bande de raccordement (22) ou lorsque la première bande (22) ne fait pas saillie de la première extrémité du tube, la bande chevauchante est une bande séparée prévue sur ledit tube en béton (10) afin de chevaucher partiellement sur la première bande et la seconde bande, et
dans lequel ladite première bande de raccordement (22) et ladite seconde bande de raccordement (32) sont réalisées à partir d'une matière plastique choisie dans le groupe comprenant : le polyéthylène haute densité, le HDPE, le polychlorure de vinyle, le PVC, le polyéthylène faible densité linéaire, le LLDPE et le polypropylène flexible, FPP.

2. Tube (10) selon la revendication 1, **caractérisé en ce que** ladite première bande de raccordement (22) et ladite seconde bande de raccordement (32) sont ancrées au tube en béton (10) pendant la fabrication dudit tube.

3. Tube (10) selon l'une quelconque des revendications précédentes, dans lequel ladite première bande de raccordement (22) a une largeur comprise entre environ 200 mm et environ 500 mm.

4. Tube (10) selon l'une quelconque des revendications précédentes, dans lequel ladite seconde bande de raccordement (32) a une largeur comprise entre environ 150 mm et environ 300 mm.

5. Tube (10) selon l'une quelconque des revendications précédentes, dans lequel ledit au moins un dispositif d'ancrage (23, 33) a une section transversale en forme de T.

6. Procédé pour construire une canalisation comprenant les étapes consistant à :
prévoir un premier tube selon l'une quelconque des revendications 1 à 5,
prévoir un second tube selon l'une quelconque des revendications 1 à 6 ; et
raccorder la bande chevauchante du premier tube et la seconde bande de raccordement du second tube le long d'au moins un bord.

7. Procédé selon la revendication 6, **caractérisé en ce que** ladite étape de raccordement comprend l'étape consistant à souder les première et seconde bandes de raccordement au moyen d'un système d'air chaud, d'un système de plaque chaude bout à bout, des techniques d'extrusion.
